# NEUE EUROPÄISCHE PATENTSCHRIFT

(11) **EP 3 456 535 B2**
(45) Veröffentlichungstag und Bekanntmachung des Hinweises auf die Entscheidung über den Einspruch: **04.03.2026**
(45) Hinweis auf die Patenterteilung: 21.04.2021
(21) Anmeldenummer: 18181139.9
(22) Anmeldetag: 02.07.2018
(51) Int. Cl.: B41F 33/00

(54) **BILDINSPEKTION VON DRUCKERZEUGNISSEN MIT FEHLERKLASSEN**
IMAGE INSPECTION PRINTED PRODUCTS WITH DEFECT CLASSES
INSPECTION D'IMAGE DES PRODUITS IMPRIMÉS AVEC DES CLASSES D'ERREUR

(30) Priorität: 14.09.2017 DE 102017216260
(43) Veröffentlichungstag der Anmeldung: 20.03.2019
(73) Patentinhaber: Heidelberger Druckmaschinen AG, 69115 Heidelberg (DE)
(72) Erfinder: Soltwedel, Frank, 74889 Sinsheim/Hoffenheim (DE); Epp, Sascha, 74889 Sinsheim-Eschelbach (DE); Felzen, Volker, 69234 Dielheim (DE); Klüpfel, Martin, 68766 Hockenheim (DE); Peters, Uwe, 69151 Neckargemünd (DE)

(56) Entgegenhaltungen:
- EP-A1- 2 529 932
- EP-A2- 1 607 220
- EP-A2- 1 777 073
- WO-A1-2005/094054
- WO-A2-2005/092613
- WO-A2-2010/020564
- DE-A1- 102011 014 073
- DE-A1- 19 516 354
- DE-B4- 102007 043 103
- US-B2- 8 194 270
- Mitsubishi Heavy Industries, Ltd., "Development of DIAMOND EYETM the World's First In-line Quality Control System for Newspaper Printing" 30.09.2006
- Helmut Kipphan, Handbuch der Printmedien - Technologien und Produktionsverfahren, Berlin: Springer 2000, S.270 und S.322-333 (ISBN 3-540-66941-8)

## Beschreibung

Die vorliegende Erfindung betrifft ein Verfahren zum Makulaturmanagement mittels Profilen mit dem Ziel einer automatisierten Maschinenreaktion auf Basis vordefinierter Handlungsprofile in Verbindung mit Messdaten, die während der Druckproduktion über Sensoren ermittelt und mit den Handlungsprofilen abgeglichen werden. Eine besondere Ausprägung dieses Verfahrens resultiert in einem Verfahren zur Bildinspektion von Druckerzeugnissen, wobei fehlerhafte Druckbilder in Abhängigkeit von ihrer Fehlerklasse von unterschiedlichen Endgeräten weiterbehandelt werden.

Die Erfindung liegt im technischen Gebiet der automatischen Qualitätskontrolle.

In der heutigen Druckindustrie wird insbesondere bei größeren Druckmaschinen die Qualitätskontrolle automatisiert über sogenannte Inline-Inspektionssysteme durchgeführt. Inline bedeutet in diesem Fall, dass das Inspektionssystem, genauer gesagt die Kamera des Inspektionssystems, in der Maschine angebracht ist. Sie wird dabei üblicherweise nach dem letzten Druckwerk oder, falls vorhanden, einer weiteren Nachbearbeitungsstation, wie zum Beispiel einem Lackwerk, angebracht und erfasst die von der Druckmaschine erzeugten Druckprodukte. Die derart mittels der Kamera erzeugten digitalen Druckbilder werden dann in einem Bildverarbeitungsrechner mit entsprechenden Gutbildern des Drucksujets abgeglichen. Diese Gutbilder können dabei entweder aus den Vorstufendaten erstellt werden oder sie werden eingelernt. Einlernen bedeutet in diesem Fall, dass eine Reihe von Druckprodukten mit dem zu erzeugenden Drucksujet gedruckt und von der Kamera des Inspektionssystems erfasst wird. Diese Musterdrucke sollten möglichst fehlerfrei sein und werden daher nach Erfassen durch das Inspektionssystem als digitale Referenz im Bildverarbeitungsrechner als Gutbild hinterlegt. Im Fortdruckprozess werden dann durch die Kamera des Inspektionssystems das erzeugte Druckbild oder Teile davon erfasst und mit der digital eingelernten oder der aus den Vorstufendaten erstellten Gutbildreferenz abgeglichen. Werden dabei Abweichungen zwischen den im Fortdruck produzierten Druckprodukten und der digitalen Referenz festgestellt, so werden diese Abweichungen dem Drucker angezeigt, welcher dann entscheiden kann, ob diese Abweichungen akzeptabel sind oder ob die derart erzeugten Druckprodukte als Makulatur zu entfernen sind. Die als Makulatur erkannten Druckbögen können über eine Makulaturweiche ausgeschleust werden. Der gesamte Vorgang kann auch automatisiert erfolgen, indem der Drucker entsprechende Schwellwerte in Form von Toleranzen setzt, so dass nur dann automatisiert Fehlerbogen ausgeschleust werden, welche diese Toleranzwerte überschreiten. Zusätzlich ist es auch möglich, dass Bogen oder Druckprodukte mit Abweichungen von der digitalen Referenz nicht als Makulatur gekennzeichnet werden, sondern zum Beispiel im Falle eines mit Fehlern behafteten Druckbogens durch einen Streifen gekennzeichnet werden, so, dass dieser Druckbogen im Ausleger vom Drucker entnommen und einer manuellen Überprüfung unterzogen werden kann.

Häufig kommt es im Rahmen dieser Inspektion von Druckprodukten auch zu speziellen Anwendungsfällen. So tritt zum Beispiel bei der Verwendung von Sonderfarben häufig auf, dass an den Rändern des Druckproduktes ein Schmieren der Druckfarben entsteht. Die Ursache dafür ist häufig eine ungünstige Farb-/Wasser-Balance. Dieses Schmieren der Farbe beginnt dabei immer an den Rändern des Druckproduktes und wandert im Fortgang des Druckprozesses immer weiter in das Innere des Druckproduktes. Weitere Beispiele für auftretende Effekte können leerlaufende Farbwerke oder umschlagene Bereiche des Druckbogens sein. Leerlaufende Farbwerke sind für die Bildinspektion vor allem dann ein Problem, wenn es sich um doppelt verwendete Farben handelt - z.B. die Verwendung von cyan/blau in zwei Farbwerken zum Übereinanderdruck, um damit eine erhöhte Farbdichte zu erreichen. Läuft nun eines der beiden Cyan-Farbwerke leer, ist dies für die Bildinspektion nicht zu erkennen, da der Unterschied zwischen einer einfach und einer doppelt bedruckten Farbfläche nicht groß genug ist, um in der inspizierten Fläche eine den Schwellwert überschreitende Abweichung zu erzeugen. Registriert werden kann ein solches leerlaufendes Farbwerk jedoch anhand der Druckkontrollstreifen, welche dann in der entsprechenden Testfläche des leergelaufenen Farbwerkes leer bleiben. Bei einem leerlaufenden Farbwerk einer nur einfach verwendeten Farbe, fällt dies dagegen sofort in der Inspektionsfläche auf. Umschlagene Bereiche des Druckbogens treten dagegen auf, falls der Greifer den Druckbogen nicht komplett erfasst.

Das Drucksujet, welches die eigentlich zu erzeugenden Druckbilder enthält, wird im Rahmen des Ausschießens auf dem Druckprodukt platziert. Dies bedeutet nun für die Inspektion, dass es möglich ist die Inspektion so einzustellen, dass nur das Drucksujet selbst von den Kameras des Inspektionssystems als Inspektionsfläche erfasst und überwacht wird. Der Vorteil gegenüber einer Inspektion des kompletten Druckbogens, welche natürlich ebenfalls möglich ist, liegt darin, dass nur auftretende Fehler in Bereichen die den Drucker interessieren - nämlich im Drucksujet - vom Inspektionssystem erfasst und dem Drucker mitgeteilt werden. Dies reduziert die Anzahl der Fehlermeldungen und auch das Datenaufkommen, welches vom Inspektionssystem erzeugt und verarbeitet werden muss massiv, da die Inspektion eine hohe Zahl von Verfahrensschritten, wie die z.B. Speicherung von Fehlerbildern sowie die Anfertigung eines Fehlerprotokolls beinhaltet. Auf all dies kann für die Flächen verzichtet werden, welche nicht vom Drucksujet bedeckt sind und für welche der Drucker gar keine "Fehlermeldungen" aufgrund von Abweichungen wie z.B. Papierfehler benötigt.

Die Folge ist jedoch, dass auch Effekte, wie zum Beispiel das genannte Schmieren der Farbe an den Druckrändern oder leerlaufende Farbwerke, vom Inspektionssystem erst dann erfasst werden, wenn diese Fehler sich in die Inspektionsflächen vorarbeiten. Um dieses Problem dennoch rechtzeitig zu erkennen, schalten die Drucker in der Praxis den Inspektionsmodus des Inspektionssystems aus und in ein sogenanntes Livebild über, wo sie mittels eines digitalen Kamerabildes auf einer Anzeige den gesamten Bogen sehen können. Damit können sie erkennen, ob solche Fehler wie das Schmieren an den Rändern des Drucksubstrates auftreten und im Bedarfsfall rechtzeitig eingreifen. Nachteilig ist dabei jedoch, dass damit der automatische Inspektionsmodus unterbrochen wird, was die Performance des automatischen Inspektionssystems entsprechend herabsetzt. In jedem Fall sind Einstellungen an der Druckmaschine vorzunehmen, um diese Effekte abzustellen, was eben zu nachteiliger Performance des Inspektionssystems führt.

Eine andere Möglichkeit, derartige Fehler rechtzeitig zu erkennen, liegt darin, dass der Drucker regelmäßig erzeugte Druckbogen aus dem Ausleger entnimmt und diese auf derartig aufgetretene Fehler wie das Schmieren an den Substraträndern überprüft. Dies bedeutet jedoch zusätzlichen Aufwand für den Drucker, der in dieser Zeit seinen anderen Aufgaben zur Überwachung des Druckprozesses nicht nachkommen kann.

Das Markieren von Druckbogen, die später manuell vom Drucker untersucht werden sollen, mittels eines Streifens, geschieht durch einen sogenannten Streifeneinleger. Diese Streifeneinleger, genauso wie die Makulaturweiche, sind entsprechende Endgeräte zur Steuerung der Weiterverarbeitung des entsprechend erzeugten Druckproduktes. Beim bisherigen Stand der Technik kann dabei der Drucker nur global eine Verknüpfung des erzeugten Druckproduktes mit einem Endgerät wählen. Er kann zum Beispiel nur durch Konfiguration des Inspektionssystems bestimmen, dass es sich um einen Bogen mit zu großen Abweichungen handelt, so dass dieser über die Makulaturweiche ausgeschleust werden muss. Die Verknüpfung gilt dann generell für alle Bogen mit diesen identifizierten Abweichungen vom digitalen Referenzbild. Dies verursacht jedoch eine entsprechend hohe Makulatur mit unnötigen Kosten für den Fall, dass die erzeugten Druckprodukte vielleicht doch nach einer Begutachtung durch den Drucker noch als zu verkaufen hätten eingestuft werden können. Um dieses Szenario zu vermeiden, stellen daher die Drucker in der Praxis sehr häufig die Inspektionsparameter des Inspektionssystems auf sehr große Toleranzwerte ein, was aber dazu führt, dass zum einen das Inspektionssystem nicht mit der eigentlich möglichen Genauigkeit arbeitet und zum anderen gehen dem Drucker dabei Informationen über detailliertere Abweichungen, welche ja dann vom Inspektionssystem nicht mehr erfasst werden, verloren.

Die deutsche Patentanmeldung DE 10 2011 014073 A1 offenbart hierfür ein Verfahren zur Regelung eines Druckvorgangs, wobei mittels eines Registermarkensensors wenigstens eine Position und/oder eine Ausdehnung einer auf einem Bedruckmaterial befindlichen Registermarke erfasst und zur Registerregelung verwendet wird, welches dadurch gekennzeichnet ist, dass während des Druckvorgangs mittels desselben Registermarkensensors wenigstens eine Farbinformation erfasst wird, mit der eine Farbüberwachung durchgeführt wird, wobei ein Farbabstand zu einem Referenzwert bestimmt und ein Schwellwert für den Farbabstand definiert wird, bei dessen Überschreiten eine Warnung ausgegeben wird und/oder automatisch von Gut- auf Schlechtprodukte umgeschaltet wird. Die Erfindung schafft dadurch die Möglichkeit für eine gleichzeitige Regelung und/oder Messung der Position (Registerregelung) und Farbe mit einer einzigen Erfassungseinrichtung. Der Aufwand und die Kosten für eine Farb- und Registerregelung können deutlich gesenkt werden, da insbesondere die Vermessung der Farbinformation nicht mit teuren Kamerasystemen durchgeführt wird, sondern mit preisgünstigeren Markensensoren.

Aus der europäischen Patentanmeldung EP 1 607 220 A2 ist zudem eine Druckmaschine mit einem Inline-Inspektionssystem mit einer in einem Abstand von einem Bedruckstoff angeordneten Beleuchtungseinrichtung mit mindestens einer Lichtquelle bekannt, wobei die mindestens eine Lichtquelle der Beleuchtungseinrichtung durch ein flüssiges oder ein gasförmiges Kühlmedium gekühlt ist, wobei für die Lichtquelle der Beleuchtungseinrichtung eine Steuereinrichtung vorgesehen ist, wobei ein Lichtsensor mit der Steuereinrichtung verbunden ist, wobei der Lichtsensor die abgestrahlte Lichtmenge der mindestens einen Lichtquelle der Beleuchtungseinrichtung misst, wobei die Steuereinrichtung anhand des Messsignals des Lichtsensors eine Einschaltdauer der mindestens einen Lichtquelle anpasst.

Die deutsche Patentanmeldung DE 195 16 354 A1 offenbart zudem ein Verfahren zur Bildinspektion und Farbführung an Druckprodukten einer Druckmaschine. Wobei vorzugsweise im onHne-Betrieb Ist-Bilddaten der Druckbilder der Druckprodukte ermittelt und mit Soll-Bilddaten zur Fehlerauffindung verglichen werden. Es ist vorgesehen. Daß beim Auftreten eines Fehlers vor einer Veränderung der Farbführung geprüft wird, ob aufgrund der Fehlstart eine andere Ursache als die Farbführung für die Abweichung in Frage kommt.

Aufgabe der vorliegenden Erfindung ist es daher, ein Verfahren zur Bildinspektion von Druckerzeugnissen in einer Bedruckstoffe verarbeitenden Maschine zu finden, welches es ermöglicht, die Effizienz und Genauigkeit der Bildinspektion gegenüber dem Stand der Technik zu verbessern.

Gelöst wird diese Aufgabe durch ein Verfahren zum Makulaturmanagement in einer Bedruckstoffe verarbeitenden Maschine mittels eines Rechners, wobei es sich bei der Bedruckstoffe verarbeitenden Maschine (5) um eine Bogendruckmaschine (5) und beim verwendeten Drucksubstrat um Druckbogen (10) handelt, wobei im Rahmen des Makulaturmanagements Sensoren, insbesondere in Form eines Bilderfassungssystems mit mindestens einem Bildsensor, von den gedruckten Druckerzeugnissen Druckbilder erfassen und mit einer digitalen Referenz abgleichen und im Falle von Abweichungen der erfassten Druckbilder von der digitalen Referenz die fehlerhaft erkannten Druckerzeugnisse ausgeschleust werden, und welches dadurch gekennzeichnet ist, dass Makulaturprofile erstellt werden, welche Parameter enthalten denen jeweils bestimmte Aktionen zugeordnet werden und für von der digitalen Referenz abweichende im Rahmen der Bildinspektion erfasste Druckbilder in Abhängigkeit der Parameter die bestimmten Aktionen durchgeführt werden, wobei unterschiedliche Endgeräte jeweils abhängig von den bestimmten Aktionen angesteuert werden. Um einen Druckauftrag an der Druckmaschine zu drucken muss sie in einen für diesen Druckauftrag geeigneten Zustand gebracht werden. Vordergründig wird das durch die Auswertung der Auftragsdaten in der Vorstufe gemacht, in dem die Unterschiede zum Vorgängerauftrag ermittelt werden und dann die notwendigen Rüstszenarien errechnet werden. Es sind jedoch nicht immer alle Informationen in den Auftragsdaten enthalten. Insbesondere Informationen zum Makulaturmanagement fehlen häufig. Daher werden Makulaturprofile erstellt, welche in Form von Eingangsparametern sämtliche notwendigen Informationen enthalten, um fehlerhafte Druckerzeugnisse als Makulatur zu kennzeichnen und entsprechend durch Ansteuerung der betreffenden Endgeräte weiterzuverarbeiten, bzw. auszusondern. Auch zusätzliche Informationen, welche allgemein für das Makulaturmanagement notwendig oder nützlich sind, können Bestandteil des Makulaturprofils sein.

Vorteilhafte und daher bevorzugte Weiterbildungen dieser Erfindung ergeben sich aus den zugehörigen Unteransprüchen sowie aus der Beschreibung und den zugehörigen Zeichnungen.

Eine bevorzugte Weiterbildung des erfindungsgemäßen Verfahrens ist dabei, dass die Makulaturprofile als Parameter definierte Fehlerklassen beinhalten und diesen Fehlerklassen die bestimmten Aktionen zugeordnet werden, wobei die definierten Fehlerklassen in Fehlerklassen zur Information über noch innerhalb der Toleranzen liegende Abweichungen, zur Warnung hinsichtlich auftretender Fehler und über kritische Fehler welche direkte Aktionen erfordern, unterteilt werden. Mittels der Aufteilung der vom Inspektionssystem gefundenen Abweichungen der erzeugten Druckprodukte von der digitalen Referenz in bestimmte Fehlerklassen ist es möglich, die Ansteuerung der jeweils unterschiedlichen Endgeräte direkt in Abhängigkeit von der jeweiligen Fehlerklasse zu machen. Das heißt, die gefundenen Abweichungen werden analysiert und in eine bestimmte Fehlerklasse eingeordnet. Abhängig von dieser Fehlerklasse kann dann ein bestimmtes Endgerät angesteuert werden. Damit kann der aus dem Stand der Technik bekannte Nachteil überwunden werden, dass nur global eine Verknüpfung mit dem jeweiligen Endgerät möglich ist. Durch die Einführung der verschiedenen Fehlerklassen können auch verschiedene Fehler in der Ansteuerung ein- und desselben Endgeräts enden, wobei zusätzliche Aktionen durchgeführt werden können, welche sich wiederum für die unterschiedlichen Fehlerklassen, welche dasselbe Endgerät ansteuern, unterscheiden können. Ebenfalls von Bedeutung ist die Einführung von Fehlerklassen und deren Verknüpfung mit Endgeräten, da so Fehlerklassen für verschiedene Fehlergrößen eingeführt und verknüpft werden können. Die Unterklasse zur Information über noch innerhalb der Toleranz liegende Abweichungen würde also bedeuten, dass diese Fehlerklasse eine Abweichung beschreibt, welche noch innerhalb gewisser Maximaltoleranzen liegt, aber noch nicht dazu führt, dass das erzeugte Druckprodukt Makulatur ist. Gemäß der vorliegenden Erfindung führt diese Unterklasse dazu, dass der Drucker über diese Abweichung informiert wird, so dass er erkennen kann, dass sich im weiteren Verlauf des Druckprozesses an dieser Stelle eventuell ein Problem ergeben könnte. Eine weitere Unterklasse stellt die Warnung hinsichtlich auftretender Fehler dar, welche dem Drucker anzeigt, dass hier die Toleranzwerte bereits überschritten wurden und eventuell eine Aktion erforderlich ist, die Überschreitung der Toleranzwerte jedoch noch nicht so gravierend ist, dass unbedingt eine automatisierte Ausschleusung als Makulatur des erzeugten Druckproduktes notwendig ist. Die weitere Unterklasse hinsichtlich kritischer Fehler zeigt somit an, dass das Inspektionssystem festgestellt hat, dass direkte Aktionen erforderlich sind, üblicherweise die Kennzeichnung des erzeugten Druckproduktes als Makulatur und dessen Ausschleusung. Für eine Unterteilung in derartige Fehlerklassen muss dabei das Inspektionssystem entsprechend parametrisiert werden, so dass klar bestimmte Abweichungen bestimmten Fehlerklassen zugeordnet werden können.

Eine weitere bevorzugte Weiterbildung des erfindungsgemäßen Verfahrens ist dabei, dass die Einteilung in die Fehlerklasse zur Information über noch innerhalb der Toleranzen liegende Abweichungen als Aktion die Anzeige der Information in der Bedienoberfläche der Inspektion zur Folge hat, die Einteilung in die Fehlerklasse zur Warnung hinsichtlich auftretender Fehler das Markieren der fehlerhaften Druckerzeugnisse und die Einteilung in die Fehlerklasse über kritische Fehler das Ausschleusen der fehlerhaften Druckerzeugnisse.

Mit dieser weiteren bevorzugten Weiterbildung des erfindungsgemäßen Verfahrens verknüpft ist dabei die bevorzugte Weiterbildung, dass die Anzeige der Information in der Bedienoberfläche der Inspektion durch die Ansteuerung des Endgerätes eines Displays, auf welchem die Ergebnisse der Bildinspektion angezeigt werden, das Markieren der fehlerhaften Druckerzeugnisse durch die Ansteuerung des Endgerätes eines Streifeneinlegers und das Ausschleusen der fehlerhaften Druckerzeugnisse durch die Ansteuerung des Endgerätes einer Makulaturweiche geschieht. Die Einteilung eines Druckproduktes mit einer Abweichung von der digitalen Differenz in die Fehlerklasse zur Information über noch innerhalb der Toleranz liegende Abweichungen führt direkt zur Ansteuerung eines Endgerätes in Form eines Displays zur Anzeige der Information über die vorliegende Abweichung. Über dieses Display, zum Beispiel in Form des Displays des Leitstandes der Druckmaschine, wird der Drucker über die vorliegende Abweichung informiert. Die Fehlerklasse zur Warnung hinsichtlich auftretender Fehler ist dagegen verknüpft mit dem Endgerät des Streifeneinlegers, welcher das entsprechende fehlerhafte Druckprodukt markiert, wodurch der Drucker das markierte Druckprodukt, zum Beispiel in Form eines fehlerhaften Druckbogens, aus dem Druckausleger entnehmen und einer manuellen Überprüfung unterziehen kann, um zu bewerten, ob es sich bei dem auftretenden Fehler wirklich um einen derart gravierenden Fehler handelt, der eine Kennzeichnung des Druckproduktes als Makulatur notwendig macht. Die Fehlerklasse hinsichtlich kritischer Fehler ist dabei direkt mit dem Endgerät der Makulaturweiche verknüpft, da ein derart gravierender Fehler zwingend das erzeugte Druckprodukt als Makulatur kennzeichnet und somit das Ausschleusen über die Makulaturweiche erforderlich macht.

Eine weitere erfindungsgemäße Lösung der gestellten Aufgabe stellt zudem ein Verfahren zum Makulaturmanagement in einer Bedruckstoffe verarbeitenden Maschine mittels eines Rechners, wobei es sich bei der Bedruckstoffe verarbeitenden Maschine (5) um eine Bogendruckmaschine (5) und beim verwendeten Drucksubstrat um Druckbogen (10) handelt, wobei im Rahmen des Makulaturmanagements Sensoren, insbesondere in Form eines Bilderfassungssystems mit mindestens einem Bildsensor, von den gedruckten Druckerzeugnissen Druckbilder erfassen und mit einer digitalen Referenz abgleichen und im Falle von Abweichungen der erfassten Druckbilder von der digitalen Referenz die fehlerhaft erkannten Druckerzeugnisse ausgeschleust werden, und welches dadurch gekennzeichnet ist, dass im Rahmen der Bildinspektion eine Inspektionsfläche auf einem verwendeten Drucksubstrat zur Inspektion des zu inspizierenden Druckerzeugnisses definiert wird, während eine zusätzliche Vorwarnebene den Teil des Drucksubstrates auf unerwünschte Veränderungen überwacht, welcher außerhalb der definierten Inspektionsfläche liegt, wobei Abweichungen innerhalb der zusätzlichen Vorwarnebene einer zusätzlichen Fehlerklasse zur Vorwarnung zugeordnet werden. Die zusätzliche Vorwarnebene entspricht dabei nicht einer weiteren Inspektionsebene innerhalb des standardmäßigen Inspektionsvorganges, sondern ist ein paralleler Vorgang, welcher ein Gebiet der Überwachung definiert, ohne eine Abweichungsmeldung im Sinne der normalen Bildinspektion des Bildinspektionssystems. Für dieses Gebiet werden separate Parameter benutzt, um eine Vorwarnschwelle zu definieren, bei deren Überschreitung dem Drucker eine entsprechende Frühwarnanzeige in der Bedienoberfläche zur Verfügung gestellt wird. Erfindungsgemäß wird dabei innerhalb der definierten Inspektionsflächen die eigentliche Bildinspektion durchgeführt, während in der Vorwarnebene lediglich auf die separaten Parameter überwacht wird und keine Anzeige möglicher festgestellter Abweichungen als Fehler durchgeführt wird. Für die Vorwarnebene wird auch keine Speicherung der erzeugten Bilder in einem Inspektionsreport durchgeführt, wie dies für die Bildinspektion in den definierten Inspektionsflächen der Fall ist. Die Vorwarnebene ist also ein rein zusätzlicher informativer Aspekt, welcher den Drucker über Entwicklungen außerhalb der Inspektionsfläche auf dem Drucksubstrat informiert, um die bisher aus dem Stand der Technik bekannten Vorgehensweisen des Umschaltens in ein Livebild, welches die automatische Bildinspektion unterbricht, sowie das manuelle Überprüfen des Drucksubstrates vermeidet.

Eine bevorzugte Weiterbildung dieses erfindungsgemäßen Verfahrens ist dabei, dass die unerwünschten Veränderungen ein Schmieren der Druckfarbe an den Rändern des Drucksubstrates, ein leerlaufendes Farbwerk, Fehler im Drucksubstratlauf und Fehler im Drucksubstrat selbst, umfassen. Die separaten Parameter für die Vorwarnebene müssen entsprechend auf die unerwünschten Veränderungen in Form des Schmierens der Druckfarbe an den Rändern des leerlaufenden Farbwerkes und der Fehler im Drucksubstrat oder im Drucksubstratlauf angepasst werden.

Eine bevorzugte Weiterbildung dieses erfindungsgemäßen Verfahrens ist dabei, dass die Überwachung der zusätzlichen Vorwarnebene hinsichtlich unerwünschter Veränderungen auf dem Teil des Drucksubstrates, welcher außerhalb der definierten Inspektionsfläche liegt, durch eine separate, auf dem Rechner betriebene, Software-Instanz, durchgeführt wird, welche von der Software-Instanz, welche die Inspektion des zu inspizierenden Druckbildes durchführt, getrennt ist. Da die Überwachung der Vorwarnebene nicht in den Prozess der Bildinspektion der Inspektionsflächen einfließen soll, ist es sinnvoll, diesen Vorgang zwar auf dem gleichen Rechner für die Bildinspektion durchzuführen, aber von einer eigenen, separat betriebenen Software-Instanz durchführen zu lassen. Natürlich kann auch das Programm, welches die normale Bildinspektion durchführt, diese Aufgabe mit übernehmen, da jedoch die Vorwarnebene mit ihrem eigenen Parametersatz überwacht wird und zudem auch hinsichtlich der weiteren Auswertung der Inspektionsergebnisse völlig anders behandelt wird, als die normale Bildinspektion, ist eine Trennung dieser beiden Überwachungen in jeweils separate Programme wesentlich effizienter.

Eine bevorzugte Weiterbildung dieses erfindungsgemäßen Verfahrens ist dabei, dass die Überwachung der zusätzlichen Vorwarnebene hinsichtlich unerwünschter Veränderungen auf dem Teil des Drucksubstrates, welcher außerhalb der definierten Inspektionsfläche liegt, durch den mindestens einen Bildsensor oder durch mindestens einen separaten Bildsensor durchgeführt wird. Das erfindungsgemäße Verfahren der Überwachung der zusätzlichen Vorwarnebene bedient sich dabei der bereits für das normale Bildinspektionsverfahren benutzten Hardware in Form des installierten Kamerasystems des Inspektionssystems. Falls aus irgendeinem Grund diese Bildsensoren nicht verwendet werden können, zum Beispiel weil die Bildsensoren bestimmte Ränder oder Randbereiche des Drucksubstrates nicht überwachen, kann auch ein separater Bildsensor oder mehrere separate Bildsensoren verwendet werden.

Eine bevorzugte Weiterbildung dieses erfindungsgemäßen Verfahrens ist dabei, dass die zusätzliche Fehlerklasse zur Vorwarnung einer Fehlerklasse entspricht, welche als Aktion die Anzeige der Vorwarnung in der Bedienoberfläche der Inspektion durch die Ansteuerung des Endgerätes des Displays zur Folge hat. Die Überwachung der zusätzlichen Vorwarnebene resultiert bei einer Abweichung von den entsprechen eingestellten separaten Parametern in die Einordnung dieser Abweichung in eine zusätzliche Fehlerklasse "Vorwarnung", welche direkt verknüpft ist mit der Aktion der Anzeige der Vorwarnung in Form der Ansteuerung des Endgerätes des Displays, zum Beispiel am Leitstand der Druckmaschine.

Erfindungsgemäß handelt es sich bei der Druckmaschine um eine Bogendruckmaschine und beim verwendeten Drucksubstrat um Druckbogen. Obwohl das erfindungsgemäße Verfahren auf allen denkbaren Arten von Druckmaschinen, wie Rollenoffsetdruckmaschinen oder Digital-/Inkjetdruckmaschinen im Allgemeinen, eingesetzt werden kann, ist die erfindungsgemäße Verwendung in einer Bogendruckmaschine, bei der es sich vom verwendeten Drucksubstrat um Druckbogen handelt. Besonders die Makulaturweiche als Endgerät lässt sich wesentlich einfacher bei einer Bogendruckmaschine umsetzen als zum Beispiel bei einer Rollendruckmaschine.

Eine bevorzugte Weiterbildung dieses erfindungsgemäßen Verfahrens ist dabei, dass die Makulaturprofile Anwendungsklassen beinhalten, welche der Rechner entweder in der Vorstufe oder direkt an der Bedruckstoffe verarbeitenden Maschine einem Druckauftrag zuordnet. Mit diesen bestimmten Anwendungsklassen die vom Anwendungsziel des jeweiligen Druckauftrages abhängen, lassen sich mittels Wiederverwendung eines einmal erstellten Profils zeitaufwändige Einstellarbeiten reduzieren oder gar vermeiden.

Die Erfindung als solche sowie konstruktiv und funktionell vorteilhafte Weiterbildungen der Erfindung werden nachfolgend unter Bezug auf die zugehörigen Zeichnungen anhand wenigstens eines bevorzugten Ausführungsbeispiels näher beschrieben. In den Zeichnungen sind einander entsprechende Elemente mit jeweils denselben Bezugszeichen versehen.

Die Zeichnungen zeigen:
- Figur 1:: einen strukturellen Aufbau eines Bilderfassungssystems
- Figur 2:: eine Druckmaschine mit einem Bilderfassungssystem
- Figur 3:: ein Beispiel eines zu untersuchenden bedruckten Bogens
- Figur 4:: die Inspektionsebene dieses Bogens
- Figur 5:: die definierte Vorwarnebene samt Randfehlern auf diesem Bogen
- Figur 6:: die definierte Vorwarnebene samt leerlaufendem Farbwerk und umgeschlagenem Bogen
- Figur 7:: den schematischen Ablauf des erfindungsgemäßen Verfahrens

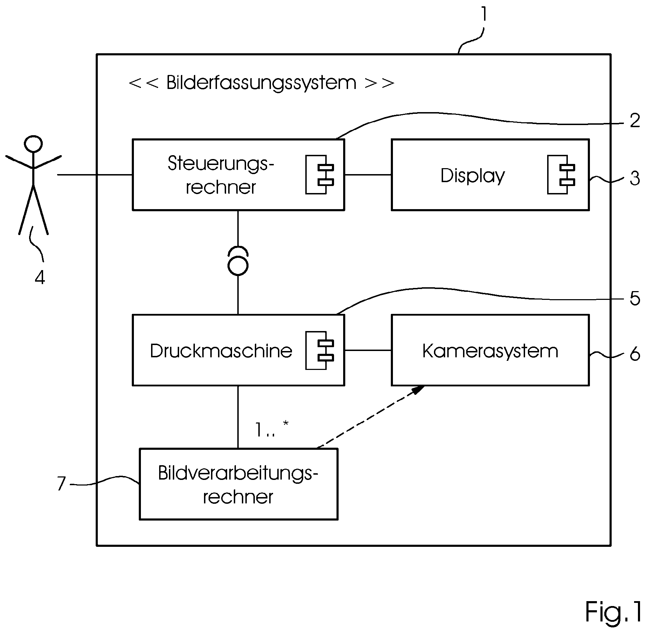

Das erfindungsgemäße Verfahren ist als Teil einer Kamera-Auswertesoftware in einer Druckmaschine 5, erfindungsgemäß in einer Bogen-Druckmaschine 5 und einer weiteren nicht erfindungsgemäßen Ausführung in gleicher Struktur auch in einer Rollen-Druckmaschine 5, implementiert. Das hierfür notwendige Bilderfassungssystem 1 besitzt ein Kamerasystem 6 bestehend aus einer oder mehreren nebeneinander angeordneten Kameras, wie z.B. Zeilen-, Array- und/oder Scannerkameras, die den Bogen/das Etikett nach dem Druck mit hoher Auflösung einlesen. Der schematische Aufbau ist in Figur 1 dargestellt. In Vorlaufrichtung sind die Kameras mit dem Druckzeilentakt synchronisiert - oder mit einem Takt, der von der Bahn abgenommen wird (Drehgeber, Laufrad, ...) - sodass die Bilder verzerrungsfrei aufgezeichnet werden - dies gilt auch bei vorgespannten Papierbahnen auf einer Rollen-Druckmaschine 5. Die Kameras sind mit einem schnellen Datenauswerterechner 7 verbunden, auf dem das Verfahren ausgeführt wird. Es ist auch möglich, das Verfahren auf dem Steuerungsrechner 2 der Druckmaschine 5 durchzuführen, jedoch wird die Ausführungen über den Datenauswerterechner, bzw. Bildverarbeitungsrechner 7 bevorzugt. Die Ergebnisse werden dann über eine Netzwerkschnittstelle an die Maschinensteuerung und eine Anzeige für den Drucker 4 (z.B. am Wallscreen/Display 3 der Druckmaschine 5) weitergereicht.

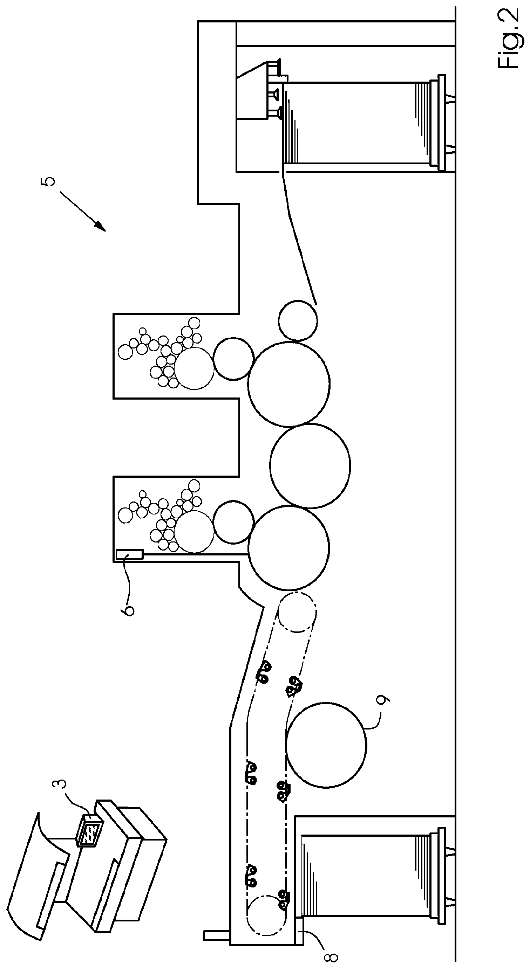

Dieses Bilderfassungssystem 1 ist in eine Druckmaschine 5 integriert, wie in Figur 2 dargestellt wird. Das Kamerasystem 6 wird dabei bevorzugt im letzten Druckwerk der Druckmaschine 5 integriert. Die durch das Bilderfassungssystem 1 gefundenen Druckfehler können dann über ein Display 3 dem Drucker 4 angezeigt werden. Weitere Endgeräte stellen die in Figur 2 dargestellte Makulaturweiche 9 und der Streifeneinleger 8 dar, mit denen jeweils erzeugte und fehlerhafte Druckbogen 10 ausgeschleust, bzw. zur weiteren Begutachtung markiert werden können.

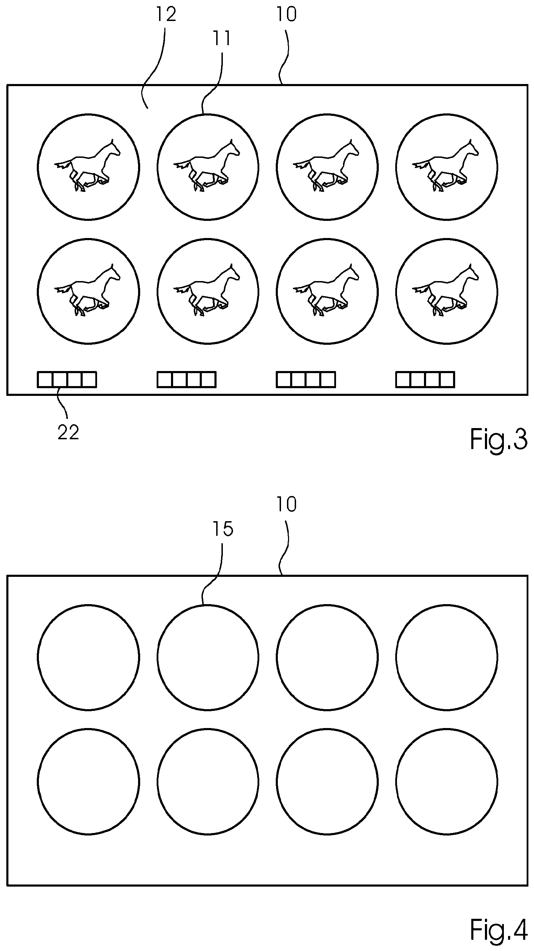

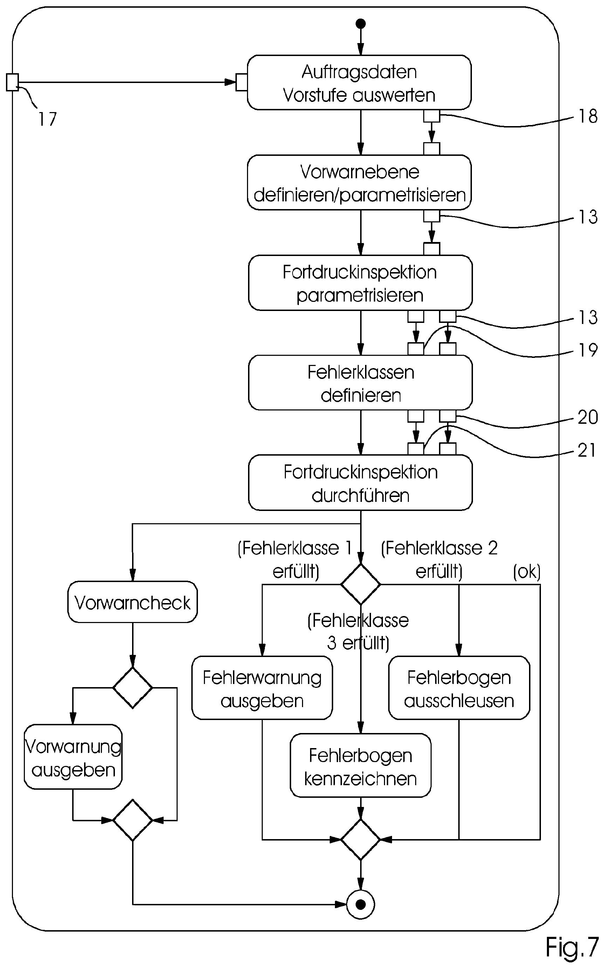

Figur 7 zeigt dazu den Ablauf des erfindungsgemäßen Verfahrens in seiner bevorzugten Ausführungsvariante. Zuerst werden die Daten des Druckauftrages 17 im Rechner der Vorstufe ausgewertet und daraus die Daten 18 zur Ansteuerung der Druckmaschine 5 für den Druck des zu erzeugenden Druckbildes erstellt, aus welchen sich wiederum im Rahmen der Bilderfassung/-inspektion die Inspektionsflächen 15 im zu erzeugenden Druckbild definieren lassen. Für jeden Auftrag werden dabei individuell Inspektionsflächen 15 definiert, in der die Inspektion aktiv sein soll. Dies ist sehr gut in Figur 3 und Figur 4 zu erkennen. Figur 3 zeigt ein Beispiel eines zu erzeugenden Druckbildes auf einem Bogen 10, wobei dieses sich in die Nutzen 11 und die nicht bedruckten Bereiche 12 aufteilt. Zusätzlich sind noch Druckkontrollstreifen 22 zu erkennen, welche sich in der nicht inspizierten Fläche befinden. Auf diesem Druckbild werden dann die Inspektionsflächen 15 für die Nutzen 11 definiert, welche in Figur 4 dargestellt sind. Ist dies geschehen, kann danach in einem nächsten Schritt die Vorwarnebene 13 definiert und parametrisiert werden. Außerhalb der definierten Inspektionsflächen 15 wird dabei der restliche Bogen 10 als "Vorwarnebene" 13 definiert. Für diese Vorwarnebene 13 kann der Drucker Parameter definieren (z.B. die Größe der Abweichung, Kontrast der Abweichung, Wiederholhäufigkeit) und wann das Kamerasystem 6 eine Vorwarnung liefern soll. Für diese Ebene werden keine Abweichungen als Fehler angezeigt. Es wird vielmehr eine Frühwarnanzeige in der Bedienoberfläche eingeblendet, die den Drucker 4 darauf hinweist, dass im Rahmen der Bilderfassung/-inspektion und ihrer eingestellten Parameter hier Abweichungen gegenüber der eingelernten oder aus den Vorstufendaten 17 erstellten Referenz festgestellt wurden. Damit kann der Drucker 4 dann die Ursache analysieren und Maßnahmen vornehmen, bevor die unerwünschten Eigenschaften den zu erzeugenden Drucknutzen 11 erreichen.

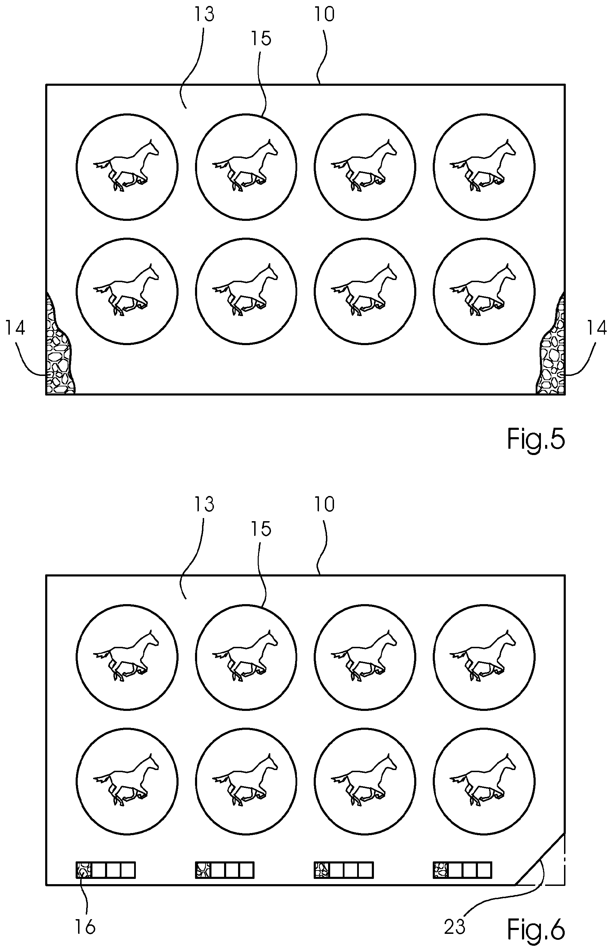

Zwei Effekte treten dabei häufig auf: 1. Schmieren an den Rändern, 2. Das Farbwerk läuft leer. Ein Beispiel, wie dies aussehen kann, ist in Figur 5 dargestellt. Die Vorwarnebene 13 erstreckt sich über alle Bereiche des Druckbogens 10, die nicht von einem zu inspizierenden Nutzen 15 bedeckt sind. Gut zu erkennen ist das durch Schmieren der Druckfarbe an den Rändern verursachte Fehlerbild 14. Figur 6 zeigt den gleichen Sachverhalt, bildet jedoch den Fehler eines leerlaufenden Farbwerks 16 ab. Dies kann vom Bilderfassungssystem 1 dadurch detektiert werden, dass die betreffende Fläche 16 des Druckkontrollelementes 22 leer bleibt. Des Weiteren ist das Fehlerbild einer umgeschlagenen Ecke 23 des Druckbogens 10 dargestellt. Weitere Effekte umfassen zum Bespiel durch die Bogenführung entstehende Falten im Bedruckstoff. Auch ein Schmieren mit Tonen kann auftreten.

Der nächste Schritt im erfindungsgemäßen Verfahren besteht darin, die Daten der eigentlichen Fortdruckinspektion 19 für die Inspektionsflächen 15 zu parametrisieren. Dies kann auch vor der Definition und Parametrisierung der Vorwarnebene 13 geschehen. In einem weiteren Schritt des erfindungsgemäßen Verfahrens werden dann Makulaturprofile für die Behandlung während der Inspektion, bzw. der Vorwarnüberwachung entdeckter Druckfehler erstellt. In einer bevorzugten Ausführungsvariante werden diese Makulaturprofile in Form von Fehlerklassen 20, 21 realisiert. Der Drucker 4 kann dazu in einem Menü der Fortdruckinspektion die Parameter für die Fehlerklassen 20, 21 festlegen. In der Bedienung der Maschinesteuerung kann der Drucker 4 dann diese Fehlerklassen mit den gewünschten Endgeräten 3, 8, 9 verknüpfen, womit die Behandlung entdeckter und klassifizierter Fehler automatisiert wird. Beispiele für solche Fehlerklassen und die dadurch angesteuerten Endgeräte 3, 8, 9, bzw. die dadurch getriggerten Aktionen sind erfindungsgemäß zum Beispiel:

| | | | |
|---|---|---|---|
| Klasse 1: | Information | | nur Anzeige in der Bedienoberfläche der Inspektion |
| Klasse 2: | Warnung | → | z.B. markieren der Druckbogen mittels Streifeneinleger |
| Klasse 3: | Kritisch | → | diese Bogen können einer Makulaturweiche zugeführt werden |

Je nachdem in welche Fehlerklasse 20, 21 die im Rahmen der Rahmen der Bilderfassung/- inspektion erkannten Fehler zugeordnet werden, können so automatisiert direkte Aktionen von den jeweils zugeordneten Endgeräten 3, 8, 9 ausgeführt werden, was zu einer erhöhten Effizienz der Bilderfassung/-inspektion führt. Bisher war es im Stand der Technik stets ein Problem, dass nur die Verknüpfung mit einem Endgerät 3, 8, 9 möglich war. So war das Bilderfassungssystem 1 zum Beispiel nur mit der Makulaturweiche 9 verknüpft. Dies führte dazu, dass, bei entsprechend scharfer Inspektion, selbst geringste Fehler zur Ausschleusung der Druckbogen 10 über die Makulaturweiche 9 führten - mit den entsprechend erhöhten Kosten. Über die vorab definierte Verknüpfung und Zuordnung von Fehlerklassen 20, 21 erhält der Drucker 4 nun die Möglichkeit einer automatischen Steuerung der Druckbogen 10 in Abhängigkeit der Inspektionsergebnisse. Damit kann er 4 sicherstellen, dass eine scharfe Inspektion mit geringen Schwellwerten möglich ist, ohne dass die Bogen sofort per Makulaturweiche 9 ausgeschleust und vernichtet werden. Zudem erhält er 4 die Möglichkeit einer Trennung von Information und Makulaturmanagement. Ohne diese Umsetzung müsste er 4 sich für einen der Wege entscheiden und verliert damit Flexibilität oder Information. Zudem wird der Drucker 4 dahingehend entlastet, dass er nicht mehr ständig den Inspektionsmodus unterbrechen muss, um außerhalb der Inspektionsflächen 15, des Nutzens 11 auftretende Fehler 14, 16 zu kontrollieren.

Die Makulatur-Profile können jedoch noch wesentlich mehr benötigte Informationen, als nur reine Fehlerklassen beinhalten, welche ja hauptsächlich definieren, was als Makulatur erkannt werden soll und was mit der erkannten Makulatur geschehen soll.

In einer weiteren bevorzugten Ausführungsvariante entsprechen die Makulaturprofile daher ganz allgemein Vorlagen, welche entsprechende Eingangsparameter enthalten und zu diesen Parametern definierte Handlungen beschreiben, die die Maschine ausführen soll. Es können verschiedene Profile als Vorlagen definiert und automatisiert von der Maschine verarbeitet werden. Die Profile können dabei auf unterschiedliche Art und Weise entstehen. Teile davon kann z.B. der Anwender 4 definieren. Daraus lassen sich dann bereits Maschineneinstellungen 18 ableiten. Diese Maschineneinstellungen 18 können dann durch weitere Eingangsparameter, wie z. B. individuelles Erfahrungswissen der Druckerei, ergänzt werden. Des Weiteren, können auch noch Anpassungen durch das Bedienpersonal 4 der Druckmaschine 5 gemacht werden.

Solche individuellen Eingangsparameter könnten z.B. die Anzahl Einrichtebogen sein, die abhängig vom Anwender und der geforderten Qualität definieren, ab wann eine Gutbogenproduktion automatisch starten soll und welche Druckbogen 10 automatisiert ausgeschleust werden.

Die Profile werden entweder in der Vorstufe oder direkt an der Druckmaschine 5 einem Druckauftrag zugeordnet. Dabei sind verschiedenste Kategorien für die Druckaufträge möglich, z.B. Pharma, Verpackung, Etiketten, Security etc.

Die Druckmaschine 5 leitet dann nun unter Berücksichtigung ihrer Ausstattung die konkreten Einstellungen für die Ermittlung von Makulatur und dem Umgang mit diesem ab und parametriert die Druckmaschine 5 und einbezogene Peripheriegeräte zur Makulaturerkennung, - ausschleussung, -markierung und -dokumentation.

Mit den Makulaturprofilen können auch Anwendungsklassen abgebildet werden. Durch eine derartige Wiederverwendung eines einmal erstellten Makulaturprofils werden zeitaufwändige Einstellarbeiten reduziert oder gar vermieden. Ziel ist eine automatisierte Maschinenreaktion auf Basis vordefinierter Handlungsprofile in Verbindung mit Messdaten, die während der Druckproduktion über Sensoren ermittelt und mit den Handlungsprofilen abgeglichen werden.

In einer weiteren Ausführungsvariante können die Makulaturprofile zusätzlich zu den Anforderungen bezgl. des Makulaturmanagements auch Anweisungen für das Bedienpersonal 4 und weitere Einstellungen enthalten. Diese können z.B. Informationen zu Tätigkeiten und Einstellungen, welche nicht automatisiert aus den Auftragsdaten ermittelt werden können, oder die nicht automatisiert einstellbar sind, umfassen.

Ein Beispiel für ein Makulaturprofil im erfindungsgemäßen Verfahren schaut folgendermaßen aus:

| Anwendungsklasse Verpackung 1 | | | |
|---|---|---|---|
| Bedieneranweisungen | | | |
| Anweisung 1 | Text 1 | | |
| Probebogen | Alle 500 Bögen | 500 | |
| ... | | | |
| | | | |

| Einstellungen: | | | |
|---|---|---|---|
| Puders orte | Xyz | | |
| Feuchteeinstellung | ... | | |
| Farbwerkeinstellungen | ... | | |
| Lackierwerkeinstellungen | ... | | |
| Rasterwalze | ... | | |
| ... | | | |
| | | | |

| Makulaturmanagement: | | | |
|---|---|---|---|
| Anlaufmakulatur | Makuschleuse | | |
| Ablaufmakulatur | Makuschleuse | | |
| ISC | Ein | | |
| Streifeneinleger | Zählen | 1000 | |
| Ziehfehler | Makuschleuse | | |
| Code-Star | Ein | StartNr: 00001 | |
| ... | | | |
| | | | |

| Farbmessgerät: | | | |
|---|---|---|---|
| Farbregelung | Ein | | |
| ... | | | |
| | | | |

| Inspektion: | | | |
|---|---|---|---|
| Level | 2 | | |
| Fehlerklasse 1 | Stapel | | |
| Fehlerklasse 2 | Makuschleuse | | |
| Fehlerklasse 3 | Makuschleuse | | |
| | | | |

| Profil angereichtert duch Jobspezifische Daten | | | |
|---|---|---|---|
| Abstimmung mit Kunde | 10.03.2018 14:30 | | |

### Bezugszeichenliste

- 1: Bilderfassungssystem
- 2: Steuerungsrechner der Druckmaschine
- 3: Display (Endgerät)
- 4: Drucker/Anwender
- 5: Druckmaschine
- 6: Kamerasystem
- 7: Bildverarbeitungsrechner
- 8: Streifeneinleger (Endgerät)
- 9: Makulaturweiche (Endgerät)
- 10: Druckbogen
- 11: Nutzen
- 12: nicht mit Nutzen bedruckte Fläche
- 13: Vorwarnebene
- 14: durch Schmieren an Bogenrändern verursachter Druckfehler
- 15: Inspektionsfläche
- 16: durch leerlaufendes Farbwerk verursachter Druckfehler
- 17: Vorstufendaten
- 18: Daten zur Ansteuerung der Druckmaschine
- 19: Parameter für Fortdruckinspektion
- 20: Fehlerklassen für Fortdruckinspektion
- 21: Fehlerklassen für Vorwarnebene
- 22: Druckkontrollstreifen
- 23: umgeschlagene Bogenseite

## Patentansprüche

1. Verfahren zum Makulaturmanagement in einer Bedruckstoffe verarbeitenden Maschine (5) mittels eines Rechners (2, 7), wobei es sich bei der Bedruckstoffe verarbeitenden Maschine (5) um eine Bogendruckmaschine (5) und beim verwendeten Drucksubstrat um Druckbogen (10) handelt, wobei im Rahmen des Makulaturmanagements Sensoren, insbesondere in Form eines Bilderfassungssystems (1) mit mindestens einem Bildsensor (6), von den gedruckten Druckerzeugnissen Druckbilder (11) erfassen und mit einer digitalen Referenz abgleichen und im Falle von Abweichungen der erfassten Druckbilder von der digitalen Referenz die fehlerhaft erkannten Druckerzeugnisse ausgeschleust werden, wobei Makulaturprofile erstellt werden, welche Parameter enthalten denen jeweils bestimmte Aktionen zugeordnet werden und für von der digitalen Referenz abweichende im Rahmen der Bildinspektion erfasste Druckbilder (11) in Abhängigkeit der Parameter die bestimmten Aktionen durchgeführt werden, wobei unterschiedliche Endgeräte (3, 8, 9) jeweils abhängig von den bestimmten Aktionen angesteuert werden
**dadurch gekennzeichnet,**
**dass** im Rahmen des Makulaturmanagements eine Inspektionsfläche (15) auf einem verwendeten Drucksubstrat zur Inspektion des zu inspizierenden Druckerzeugnisses definiert wird, während eine zusätzliche Vorwarnebene (13) den Teil des Drucksubstrates auf unerwünschte Veränderungen überwacht, welcher außerhalb der definierten Inspektionsfläche (15) liegt, wobei Abweichungen innerhalb der zusätzlichen Vorwarnebene (13) einer zusätzlichen Fehlerklasse (21) zur Vorwarnung zugeordnet werden.

2. Verfahren nach Anspruch 1,
**dadurch gekennzeichnet,**
**dass** die Makulaturprofile als Parameter definierte Fehlerklassen (20, 21) beinhalten und diesen Fehlerklassen die bestimmten Aktionen zugeordnet werden, wobei die definierten Fehlerklassen (20) in Fehlerklassen zur Information über noch innerhalb der Toleranzen liegende Abweichungen, zur Warnung hinsichtlich auftretender Fehler und über kritische Fehler welche direkte Aktionen erfordern, unterteilt werden.

3. Verfahren nach Anspruch 2,
**dadurch gekennzeichnet,**
**dass** die Einteilung in die Fehlerklasse zur Information über noch innerhalb der Toleranzen liegende Abweichungen als Aktion die Anzeige der Information in der Bedienoberfläche der Inspektion zur Folge hat, die Einteilung in die Fehlerklasse zur Warnung hinsichtlich auftretender Fehler das Markieren der fehlerhaften Druckerzeugnisse und die Einteilung in die Fehlerklasse über kritische Fehler das Ausschleusen der fehlerhaften Druckerzeugnisse.

4. Verfahren nach Anspruch 3,
**dadurch gekennzeichnet,**
**dass** die Anzeige der Information in der Bedienoberfläche der Inspektion durch die Ansteuerung des Endgerätes eines Displays (3), auf welchem die Ergebnisse der Bildinspektion angezeigt werden, das Markieren der fehlerhaften Druckerzeugnisse durch die Ansteuerung des Endgerätes eines Streifeneinlegers (8) und das Ausschleusen der fehlerhaften Druckerzeugnisse durch die Ansteuerung des Endgerätes einer Makulaturweiche (9) geschieht.

5. Verfahren nach einem der vorherigen Ansprüche,
**dadurch gekennzeichnet,**
**dass** die unerwünschten Veränderungen (14, 16) ein Schmieren der Druckfarbe an den Rändern des Drucksubstrates (14), ein leerlaufendes Farbwerk (16), Fehler im Drucksubstratlauf und Fehler im Drucksubstrat selbst, umfassen.

6. Verfahren nach Anspruch 5,
**dadurch gekennzeichnet,**
**dass** die Überwachung der zusätzlichen Vorwarnebene (13) hinsichtlich unerwünschter Veränderungen (14, 16) auf dem Teil des Drucksubstrates, welcher außerhalb der definierten Inspektionsfläche (15) liegt, durch eine separate, auf dem Rechner (2, 7) betriebene, Software-Instanz, durchgeführt wird, welche von der Software-Instanz, welche die Inspektion des zu inspizierenden Druckbildes (11) durchführt, getrennt ist.

7. Verfahren nach einem der Ansprüche 5 bis 6,
**dadurch gekennzeichnet,**
**dass** die Überwachung der zusätzlichen Vorwarnebene (13) hinsichtlich unerwünschter Veränderungen (14, 16) auf dem Teil des Drucksubstrates, welcher außerhalb der definierten Inspektionsfläche (15) liegt, durch den mindestens einen Bildsensor (6) oder durch mindestens einen separaten Bildsensor durchgeführt wird.

8. Verfahren nach einem der vorherigen Ansprüche,
**dadurch gekennzeichnet,**
**dass** die zusätzliche Fehlerklasse (21) zur Vorwarnung einer Fehlerklasse entspricht, welche als Aktion die Anzeige der Vorwarnung in der Bedienoberfläche der Inspektion durch die Ansteuerung des Endgerätes des Displays zur Folge hat.

9. Verfahren nach einem der vorherigen Ansprüche,
**dadurch gekennzeichnet,**
**dass** die Makulaturprofile Anwendungsklassen beinhalten, welche der Rechner (2, 7) entweder in der Vorstufe oder direkt an der Bedruckstoffe verarbeitenden Maschine (5) einem Druckauftrag zuordnet.

## Claims

1. Method for waste management in a machine (5) for processing printing substrates by means of a computer (2, 7), the machine (5) for processing printing substrates being a sheet-fed printing press (5) and the printing substrate used being printed sheets (10), wherein, as part of the waste management, sensors, in particular in the form of an image capture system (1) with at least one image sensor (6), capture printed images (11) of the printed products and compare them with a digital reference and, in the event of deviations of the captured printed images from the digital reference, the printed products recognized as incorrect are ejected,
wherein waste profiles are created which contain parameters to which specific actions are assigned in each case and the specific actions are carried out for print images (11) detected during image inspection which deviate from the digital reference as a function of the parameters, wherein different terminal devices (3, 8, 9) are actuated in each case as a function of the specific actions
**characterized in that**
an inspection area (15) is defined on a printing substrate used for inspecting the printed product to be inspected as part of waste management, while an additional pre-warning level (13) monitors that part of the printing substrate which lies outside the defined inspection area (15) for undesirable changes, deviations within the additional pre-warning level (13) being assigned to an additional error class (21) for pre-warning.

2. Method according to claim 1,
**characterized in that**
the waste profiles contain defined error classes (20, 21) as parameters and the specific actions are assigned to these error classes, whereby the defined error classes (20) are subdivided into error classes for information about deviations that are still within the tolerances, for warning about occurring errors and about critical errors that require direct actions.

3. Method according to claim 2,
**characterized in that**
the classification into the error class for information about deviations that are still within the tolerances results in the display of the information in the user interface of the inspection as an action, the classification into the error class for warning about occurring errors results in the marking of the defective printed products and the classification into the error class for critical errors results in the ejection of the defective printed products.

4. Method according to claim 3,
**characterized in that**
the information is displayed in the user interface of the inspection by actuating the terminal of a display (3) on which the results of the image inspection are displayed, the defective printed products are marked by actuating the terminal of a tape inserter (8) and the defective printed products are ejected by actuating the terminal of a waste chute (9).

5. Method according to one of the preceding claims,
**characterized in that**
the undesirable changes (14, 16) include smearing of the ink at the edges of the printing substrate (14), an empty inking unit (16), defects in the printing substrate run and defects in the printing substrate itself.

6. Method according to claim 5,
**characterized in that**
the monitoring of the additional pre-warning level (13) with regard to undesired changes (14, 16) on the part of the print substrate which lies outside the defined inspection area (15) is carried out by a separate software instance operated on the computer (2, 7), which is separate from the software instance which carries out the inspection of the printed image (11) to be inspected.

7. Method according to one of the claims 5 to 6,
**characterized in that**
the monitoring of the additional pre-warning level (13) with regard to undesired changes (14, 16) on the part of the print substrate which lies outside the defined inspection area (15) is carried out by the at least one image sensor (6) or by at least one separate image sensor.

8. Method according to one of the preceding claims,
**characterized in that**
the additional error class (21) for pre-warning corresponds to an error class which results, as an action, in the display of the pre-warning in the user interface of the inspection by actuating the terminal device of the display.

9. Method according to one of the preceding claims,
**characterized in that**
the waste profiles contain application classes which the computer (2, 7) assigns to a print job either in the prepress stage or directly at the machine (5) processing the substrates.

## Revendications

1. Procédé de gestion des macules dans une machine (5) traitant des supports d'impression, au moyen d'un ordinateur (2, 7), sachant que la machine (5) traitant des supports d'impression est une machine (5) à imprimer à feuilles et que le substrat d'impression utilisé est une feuille à imprimer (10), que des détecteurs - utilisés dans le cadre de la gestion des macules, en particulier sous la forme d'un système (1) de détection d'image comprenant au moins un capteur d'image (6) - saisissent des images d'impression (11) des produits imprimés et les comparent à une référence numérique et, en cas d'écarts entre les images d'impression saisies et la référence numérique, les produits imprimés reconnus défectueux sont rebutés,
sachant que sont créés des profils de macules, lesquels contiennent des paramètres auxquels sont respectivement associées des actions précises, et que ces actions précises sont exécutées, en fonction des paramètres, pour des images imprimées (11) saisies dans le cadre de l'inspection d'image et s'écartant de la référence numérique, sachant que différents terminaux (3, 8, 9) sont commandés respectivement en fonction des actions précises,
**caractérisé en ce que**
dans le cadre de la gestion des macules, une surface d'inspection (15) est définie sur un substrat d'impression utilisé pour l'inspection du produit imprimé à inspecter, tandis qu'un niveau de préavertissement (13) supplémentaire surveille, pour y détecter des modifications indésirables, la partie du substrat d'impression située en dehors de la surface d'inspection définie (15), sachant que des écarts à l'intérieur du niveau d'avertissement (13) supplémentaire sont associés à une catégorie de défauts (21) supplémentaire pour le préavertissement.

2. Procédé selon la revendication 1
**caractérisé en ce que**
les profils de macules définis comme paramètres contiennent des catégories de défauts (20, 21) et qu'à ces catégories de défauts sont associées des actions précises, sachant que les catégories de défauts définies (20) sont subdivisées en catégories de défauts pour informer sur des écarts encore présents, situés dans les tolérances, pour avertir de la survenue de défauts et au sujet de défauts critiques requérant des actions directes.

3. Procédé selon la revendication 2,
**caractérisé en ce que**
la classification dans la catégorie de défauts informant sur des écarts encore situés dans les tolérances provoque, comme action, l'affichage de l'information sur l'interface utilisateur de l'inspection, **en ce que** la classification dans la catégorie de défauts avertissant de défauts survenus provoque le marquage des produits imprimés défectueux, et que la classification dans la catégorie des défauts critiques provoque le rebutage des produits imprimés défectueux.

4. Procédé selon la revendication 3,
**caractérisé en ce que**
l'affichage des informations sur l'interface utilisateur de l'inspection est effectué par pilotage du terminal d'un visuel (3) sur lequel sont affichés les résultats de l'inspection de l'image, **en ce que** le marquage des produits imprimés défectueux est effectué par pilotage du terminal d'un pavillonneur (8) et **en ce que** le rebutage des produits imprimés défectueux est effectué par pilotage du terminal d'un déflecteur (9) de macules.

5. Procédé selon l'une des revendications précédentes,
**caractérisé en ce que**
les modifications indésirables (14, 16) incluent un maculage de l'encre d'impression sur les bords du substrat d'impression (14), un dispositif d'encrage (16) fonctionnant à vide, des défauts dans l'acheminement du substrat d'impression et des défauts dans le substrat d'impression lui-même.

6. Procédé selon la revendication 5,
**caractérisé en ce que**
la surveillance du niveau de préavertissement (13) supplémentaire - relativement à des modifications indésirables (14, 16) sur la partie du substrat d'impression se trouvant en dehors de la surface d'inspection (15) définie - est assurée par une instance de logiciel à part tournant sur l'ordinateur (2, 7), cette instance étant séparée de l'instance de logiciel qui effectue l'inspection de l'image d'impression (11) à inspecter.

7. Procédé selon l'une des revendications 5 à 6,
**caractérisé en ce que**
la surveillance du niveau de préavertissement (13) supplémentaire - relativement à des modifications indésirables (14, 16) sur la partie du substrat d'impression se trouvant en dehors de la surface d'inspection (15) définie - est assurée par au moins le capteur d'image (6) ou par au moins un capteur d'image à part.

8. Procédé selon l'une des revendications précédentes,
**caractérisé en ce que**
la catégorie de défauts (21) supplémentaire pour le préavertissement correspond à une catégorie de défauts entraînant comme action, par le pilotage du terminal du visuel, l'affichage du préavertissement sur l'interface utilisateur de l'inspection.

9. Procédé selon l'une des revendications précédentes,
**caractérisé en ce que**
les profils de macules contiennent des catégories d'utilisation que l'ordinateur (2, 7) associe - soit au stade du prépresse soit directement sur la machine (5) traitant les supports d'impression - à un travail d'impression.
